(19)

Europäisches
Patentamt
European
Patent Office
Office européen
des brevets

(11) **EP 2 706 382 A1**

(12) **EUROPEAN PATENT APPLICATION**

(43) Date of publication:
**12.03.2014 Bulletin 2014/11**

(51) Int Cl.:
**G01S 19/47** *(2010.01)*    **G01S 19/49** *(2010.01)*

(21) Application number: **13173579.7**

(22) Date of filing: **25.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.09.2012 CN 201210333348
05.11.2012 US 201213669256**

(71) Applicant: **O2 Micro, Inc.
Santa Clara, CA 95054 (US)**

(72) Inventors:
• **Gao, Ke
610041 Chengdu (CN)**
• **Zou, Jinghua
610041 Chengdu (CN)**
• **He, Xiaoyong
610041 Chengdu (CN)**
• **Lu, Shenghong
610041 Chengdu (CN)**

(74) Representative: **Lippert, Stachow & Partner
Patentanwälte
Postfach 30 02 08
51412 Bergisch Gladbach (DE)**

(54) **Apparatuses and methods for tracking a navigation receiver**

(57)    A satellite positioning component calculates a first position associated with a navigation receiver at a first time. An inertial positioning component calculates a second position associated with the navigation receiver at the first time. A combination positioning component provides a reference position, combines the first position and the second position into a third position based on distances among the first position, the second position, and the reference position, and locates the navigation receiver according to the third position.

FIG. 1

**Description**

RELATED APPLICATION

This application claims priority to Chinese Patent Application No. 201210333348.3, filed on September 10, 2012, with the State Intellectual Property Office of the People's Republic of China, which is hereby incorporated by reference in its entirety.

BACKGROUND

A satellite navigation system, e.g., a global positioning system (GPS), allows a satellite navigation receiver, e.g., a GPS receiver, to determine its location and velocity based on satellite signals. The GPS may include a constellation of GPS satellites orbiting the Earth. There can be at least four GPS satellites visible at a given time and a given place on the Earth's surface. Each GPS satellite continuously broadcasts GPS signals at a predetermined frequency. The GPS signals contain time and orbital information for the satellites. A GPS receiver can receive the GPS signals transmitted from at least four GPS satellites synchronously. Based on the time and orbital information from at least four GPS satellites, geographical coordinates of the GPS receiver including latitude, longitude, and altitude can be calculated.

In places such as parking garages, tunnels, urban canyons, and near trees, the satellite signals may be unavailable or degraded because lines of sight to the satellites are blocked. Consequently, the geographical coordinates calculated by the GPS receiver may be inaccurate. A device such as a vehicle, a personal digital assistant (PDA) or a cellular phone can be equipped with a navigation system that includes both a GPS and an inertial positioning system, e.g., a dead reckoning (DR) system. The DR system includes a speedometer and a gyroscope that sense the speed and orientation of the moving device. Based on a previously determined position, the speed and the orientation, the DR system estimates the device's current position. However, the accuracy of the DR system decreases over time.

A conventional navigation system is capable of combining the results from the GPS and the DR system based on position dilution of precision (PDOP) of the GPS. The PDOP value represents the additional multiplicative effect of GPS satellite geometry, which further affects the precision of the GPS positioning. For example, if the PDOP value is greater than a threshold value, indicating that the position determined using the GPS has a relatively low precision, then the navigation system uses the position fix calculated by the DR system to locate the vehicle. If the PDOP value is less than the threshold value, indicating that the position determined using the GPS has a relatively high precision, then the navigation system uses the position fix calculated by the GPS to locate the vehicle.

However, factors other than the PDOP value may reduce the precision of the GPS. In some circumstances, errors present in the pseudo-range associated with the GPS can increase but the PDOP value is still lower than the threshold value. In other words, the GPS positioning result has relatively low accuracy but the PDOP value indicates that the precision of the GPS is good. Thus, the navigation system still chooses the result from the GPS to locate the system, which degrades the accuracy of the navigation system.

SUMMARY

In one embodiment, a machine-readable medium stores a plurality of machine-executable components for tracking a navigation receiver, said machine-executable components comprising a satellite positioning component that calculates a first position associated with a navigation receiver at a first time; an inertial positioning component that calculates a second position associated with the navigation receiver at the first time; and a combination positioning component that provides a reference position, combines the first position and the second position into a third position based on distances among the first position, the second position, and the reference position, and locates the navigation receiver according to the third position.

Said combination positioning component may further comprise a combination unit that weights said first position and said second position to obtain weighted positions corresponding to said first position and said second position, and combines said weighted positions to generate said third position.

In addition, said combination positioning component may further comprise a weight unit that provides weight data used to weight said first and second positions, wherein said weight unit accesses a satellite flag indicating the validity of said first position, accesses an inertial flag indicating the validity of said second position, and determines said weight data according to said satellite flag and said inertial flag. In addition, said weight unit may set a combination flag to a value indicating that said third position is invalid if both said first position and said second position are invalid.

Said combination positioning component may further comprise a weight unit that compares a first distance between said first position and said reference position with a threshold, that compares a second distance between said second position and said reference position with said threshold, and that provides weight data used to weight said first and second positions according to results of both said comparisons. Further, said weight unit may set a combination flag to a value indicating that said third position is invalid if both said first distance are greater than said threshold.

Said combination positioning component may further comprise a weight unit that compares a first distance between said first position and said second position with a second distance between said first position and said reference position, that compares said first distance with a third distance between said second position and said reference position, and that provides weight data used to weight said first and second positions according to results of both said comparisons. Further, the weight of said first position may be equal to said third distance divided by a sum of said second distance and said third distance if said first distance is greater than said second distance and if said first distance is greater than said third distance. Further, the weight of said second position may be equal to said second distance divided by a sum of said second distance and said third distance if said first distance is greater than said second distance and if said first distance is greater than said third distance.

Said combination positioning component may further comprise a weight unit that compares a first distance between said first position and said reference position with a second distance between said second position and said reference position, and that provides weight data used to weight said first and second positions according to a result of said comparison.

Said machine-executable components may further comprise a filter that accesses a combination flag indicating whether said third position is valid, and that filters said third position to obtain said location of said navigation receiver at said first time if said combination flag indicates that said third position is valid. In addition, said filter may access location data indicating a previous location point of said navigation receiver at a second time prior to said first time, and estimate said location point at said first time according to said previous location point if said combination flag indicates that said third position is invalid. In addition, said inertial positioning component may further calculate a velocity and an orientation associated with said navigation receiver at said second time, and wherein said filter estimates said location point at said first time according to said previous location point, said velocity, and said orientation if said combination flag indicates that said third position is invalid. In addition, said satellite positioning component may further calculate a first velocity and a first orientation associated with said navigation receiver at said second time, and wherein said inertial positioning component further calculates a second velocity and a second orientation associated with said navigation receiver at said second time, and wherein said reference estimator combines said first velocity and a second velocity into a third velocity, combines said first orientation and said second orientation into a third orientation, and estimates said reference position based on said previous location point, said third velocity, and said third orientation.

Said combination positioning component may further comprise a reference estimator that accesses location data indicating a previous location point of said navigation receiver at a second time prior to said first time, and that estimates said reference position according to said previous location point.

In another embodiment, a navigation apparatus comprises an antenna configured to receive a plurality of satellite signals; a plurality of motion sensors configured to provide motion signals indicating a speed and an orientation of said navigation apparatus; and a receiver comprising a processor that executes a plurality of machine-executable components stored in a machine-readable medium to locate said navigation apparatus, wherein said machine-executable components comprise a satellite positioning component that calculates a first position associated with said navigation receiver at a first time according to said satellite signals; an inertial positioning component that calculates a second position associated with said navigation receiver at said first time according to said motion signal; and a combination positioning component that provides a reference position, that combines said first position and said second position into a third position based on distances between said first position, said second position, and said reference position, and that locates said navigation apparatus according to said third position.

In said navigation apparatus, said combination positioning component may further comprise a combination unit that weights said first position and said second position to obtain weighted positions corresponding to said first position and said second position, and combines said weighted positions to generate said third position. Further, said combination positioning component may further comprise a weight unit that accesses a satellite flag indicating the validity of said first position, that accesses an inertial flag indicating the validity of said second position, and that provides weight data used to weight said first and second positions according to said satellite flag and said inertial flag. In addition, said weight unit may set a combination flag to a value indicating that said third position is invalid if both said first position and said second position are invalid.

In said navigation apparatus, said combination positioning component may further comprise a weight unit that compares a first distance between said first position and said reference position with a threshold, that compares a second distance between said second position and said reference position with said threshold, and that provides weight data used to weight said first and second positions according to results of both said comparisons. In addition, said weight unit may set said combination flag to a value indicating that said third position is invalid if said first distance is greater than said first threshold and if said second distance is greater than said second threshold.

In said navigation apparatus, said combination positioning component may further comprise a weight unit that compares a first distance between said first position and said second position with a second distance between said first position and said reference position, that compares said first distance with a third distance between said second position and said reference position, and that provides weight data used to weight said first and second positions according to results of both said comparisons.

In said navigation apparatus, said combination positioning component may further comprise a weight unit that compares a first distance between said first position and said reference position with a second distance between said second position and said reference position, and that provides weight data used to weight said first and second positions according to a result of said comparison.

In said navigation apparatus, said machine-executable components further may comprise a filter that accesses a combination flag indicating whether said third position is valid, that filters said third position to obtain said location of said navigation receiver at said first time if said combination flag indicates that said third position is valid, and that accesses location data indicating a previous location point of said navigation receiver at a second time prior to said first time, and that estimates said location at said first time according to said previous location point if said combination flag indicates that said third position is invalid.

In said navigation apparatus, said combination positioning component may further comprise a reference estimator that accesses location data indicating a previous location point of said navigation receiver at a second time prior to said first time, and that estimates said reference position according to said previous location point at said second time. In addition, said satellite positioning component may further calculate a first velocity and a first orientation associated with said navigation receiver at said second time, and wherein said inertial positioning component further calculates a second velocity and a second orientation associated with said navigation receiver at said second time, and wherein said reference estimator combines said first velocity and a second velocity into a third velocity, combines said first orientation and said second orientation into a third orientation, and estimates said reference position based on said previous location point, said third velocity and said third orientation.

In another embodiment, a navigation receiver comprises a processor that executes machine-executable instructions stored in a machine-readable medium, wherein said instructions when executed perform operations comprising: calculating a first position associated with said navigation receiver at a first time according to a plurality of satellite signals; calculating a second position associated with said navigation receiver at said first time according to a plurality of motion signals indicating a speed and an orientation of said navigation receiver; providing a reference position; combining said first position and said second position into a third position based on distances between said first position, said second position, and said reference position; and locating said navigation receiver according to said third position.

In said navigation reveiver, said operations may further comprise: accessing weight data indicating weights of said first position and said second position; weighting said first position and said second position based on said weight data to obtain weighted positions corresponding to said first position and said second position; and combining said weighted positions to generate said third position. In addition, said operations may further comprise: accessing a satellite flag indicating the validity of said first position; accessing an inertial flag indicating the validity of said second position; and determining said weight data according to said satellite flag and said inertial flag. In addition, said operations may further comprise: setting a combination flag to a value indicating that said third position is invalid if both said first position and said second position are invalid.

In said navigation reveiver, said operations may further comprise: comparing a first distance between said first position and said reference position with a threshold; comparing a second distance between said second position and said reference position with said threshold; and determining said weight data according to results of both of said comparing operations. Moreover, said operations may further comprise: setting a combination flag to a value indicating that said third position is invalid if said first distance is greater than said first threshold and if said second distance is greater than said second threshold.

In said navigation reveiver, said operations may further comprise: comparing a first distance between said first position and said second position with a second distance between said first position and said reference position; comparing said first distance with a third distance between said second position and said reference position; and determining said weight data according to results of both of said comparing operations.

In said navigation reveiver, said operations may further comprise: comparing a first distance between said first position and said reference position with a second distance between said second position and said reference position; and determining said weight data according to a result of said comparing operation.

In said navigation reveiver, said operations may further comprise: accessing a combination flag indicating whether said third position is valid; filtering said third position to obtain said location of said navigation receiver if said combination flag indicates that said third position is valid; accessing location data indicating a previous location point of said navigation receiver at a second time prior to said first time; and estimating said location point at said first time according to said previous location point if said combination flag indicates that said third position is invalid.

In said navigation reveiver, said operations may further comprise: accessing location data indicating a previous location point of said navigation receiver at a second time prior to said first time; and providing said reference position according to said previous location point.

In said navigation reveiver, said operations may further comprise: calculating a first velocity and a first orientation associated with said navigation receiver at said second time; calculating a second velocity and a second orientation associated with said navigation receiver at said second time; combining said first velocity and a second velocity into a third velocity; combining said first orientation and said second orientation into a third orientation; and estimating said reference position based on said previous location point, said third velocity and said third orientation.

BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:

FIG. 1 illustrates a block diagram of a navigation apparatus, in an embodiment according to the present invention.

FIG. 2 illustrates a block diagram of a memory, in an embodiment according to the present invention.

FIG. 3 illustrates an example of a travel track of a navigation apparatus, in an embodiment according to the present invention.

FIG. 4 illustrates another example of a travel track of a navigation apparatus, in an embodiment according to the present invention.

FIG. 5 illustrates a flowchart of operations performed by a weight unit, in an embodiment according to the present invention.

FIG. 6 illustrates a flowchart of operations performed by a validity checking module, in an embodiment according to the present invention.

FIG. 7 illustrates a flowchart of operations performed by a special condition module, in an embodiment according to the present invention.

FIG. 8 illustrates a flowchart of operations performed by a distance module, in an embodiment according to the present invention.

FIG. 9A illustrates a diagram of an example of a reference position, a position P1 and a position P2, in an embodiment according to the present invention.

FIG. 9B illustrates a diagram of another example of a reference position, a position P1 and a position P2, in an embodiment according to the present invention.

FIG. 9C illustrates a diagram of another example of a reference position, a position P1 and a position P2, in an embodiment according to the present invention.

FIG. 10 illustrates a diagram of another example of a reference position, a position P1 and a position P2, in an embodiment according to the present invention.

FIG. 11 illustrates a diagram of another example of a reference position, a position P1 and a position P2, in an embodiment according to the present invention.

FIG. 12 illustrates a flowchart of operations performed by a filter, in an embodiment according to the present invention.

FIG. 13 illustrates a flowchart of examples of operations performed by a navigation apparatus, in an embodiment according to the present invention.

DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within thescope of the invention as defined by the appended claims.

Embodiments described herein may be discussed in the general context of computer-executable instructions residing on some form of computer-usable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments.

Some portions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present application, discussions utilizing the terms such as "calculating," "providing," "combining," "locating," "weighting," "comparing," "determining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments described herein may be discussed in the general context of machine- or computer-executable instructions residing on some form of machine- or computer-readable storage medium, such as program modules, executed by one or more computers or other devices. By way of example, and not limitation, machine/computer-readable storage media may comprise non-transitory machine/computer-readable storage media and communication media; non-transitory machine/computer-readable media include all computer-readable media except for a transitory, propagating signal. Generally, program modules include routines, programs, objects, components, data structures, etc., that perform particular tasks or implement particular abstract data types. The functionality of the program modules may be combined or distributed as desired in various embodiments.

Non-transitory machine/computer storage media includes volatile and nonvolatile, removable and non-removable media implemented in any method or technology for storage of information such as machine/computer-readable instructions, data structures, program modules or other data. Machine/computer storage media includes, but is not limited to, random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information and that can accessed to retrieve that information.

Communication media can embody machine/computer-executable instructions, data structures, and program modules, and includes any information delivery media. By way of example, and not limitation, communication media includes wired media such as a wired network or direct-wired connection, and wireless media such as acoustic, radio frequency (RF), infrared, and other wireless media. Combinations of any of the above can also be included within the scope of machine/computer-readable media.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

Embodiments in accordance with the present invention provide a navigation apparatus including a navigation receiver. The navigation receiver includes a processor that executes machine-executable components stored in a machine-readable medium to locate the navigation apparatus. The machine-executable components include a satellite positioning component that calculates a first position associated with the navigation receiver at a first time according to satellite signals, and include an inertial positioning component that calculates a second position associated with the navigation receiver at the first time according to motion signals indicating a speed and an orientation of the navigation receiver.

Advantageously, the machine-executable components further include a combination positioning component that provides a reference position, combines the first position and the second position into a third position based on distances between the first position, the second position, and the reference position, and locates the navigation apparatus according to the third position. The distances between the reference position, the first position, and the second position indicate the precisions of the positioning results associated with the satellite positioning component and the inertial positioning component, no matter what may be the cause for the inaccuracy of the first position and/or the second position. For example, either a relatively poor position dilution of precision (PDOP) value of GPS or an error of the pseudo-range can cause the difference between the first position and the reference position to be greater than a threshold, which indicates that the first position is inaccurate. In this condition, the combination positioning component calculates the third position totally relying on the second position associated with the inertial positioning component. Therefore, compared to a conventional navigation system, the accuracy of the navigation apparatus is improved.

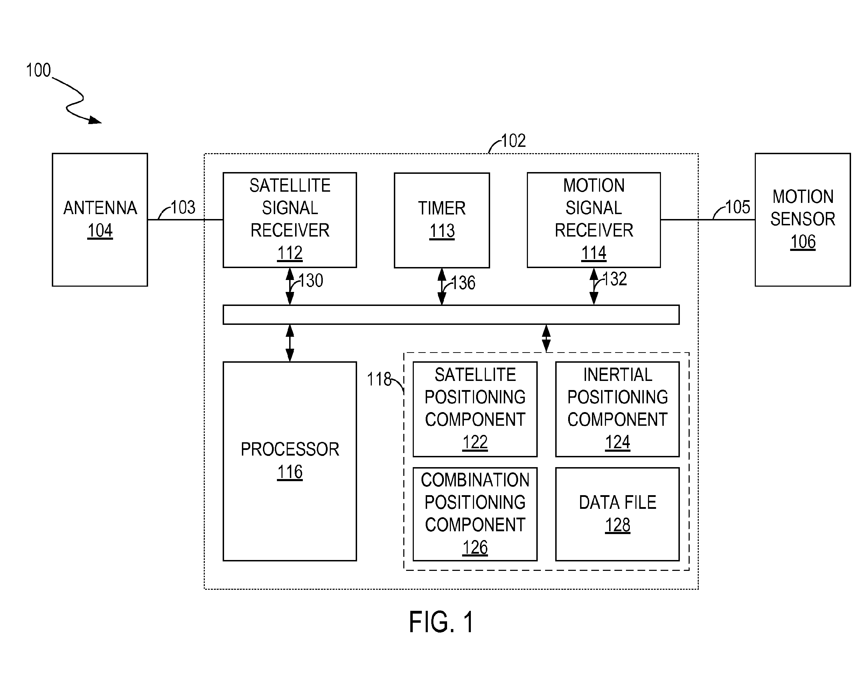

FIG. 1 illustrates a block diagram of a navigation apparatus 100, in an embodiment according to the present invention. In one embodiment, the navigation apparatus 100 is utilized in a device such as a vehicle, a mobile phone or a portable computer. In the example of FIG. 1, the navigation apparatus 100 includes a receiver 102, an antenna 104, and a motion sensor 106. The antenna 104 receives satellite signals 103 transmitted from multiple satellites, e.g., global positioning system (GPS) satellites. The motion sensor 106 senses motion of the navigation apparatus 100, and provides motion signals 105. In one embodiment, the motion sensor 106 includes a speedometer and a gyroscope that sense speed and orientation of the navigation apparatus 100, respectively. Thus, the motion signals 105 contain information about the speed and the orientation of the navigation apparatus 100. The receiver 102 receives the satellite signals 103 and the motion signals 105, and locates the navigation apparatus 100 accordingly.

In one embodiment, the receiver 102 includes a satellite signal receiver 112, a timer 113, a motion signal receiver 114, a processor 116, and memory 118. The timer 113 provides a reference clock signal 136. The motion signal receiver 114 receives the motion signals 105, and provides digital motion data 132 indicating the speed and the orientation of the navigation apparatus 100. The satellite signal receiver 112 coupled to the antenna 104 is capable of analyzing the satellite signals 103 and providing acquisition and tracking data 130 accordingly. More specifically, in one embodiment, the satellite signal receiver 112 analyzes the satellite signals 103 to determine if one or more corresponding satellites are within view of (visible to) the receiver 102. If a satellite is acquired, the satellite signal receiver 112 tracks the satellite to provide the acquisition and tracking data 130. The acquisition and tracking data 130 contains information about the tracked satellites, such as a Coarse/Acquisition code, GPS date and time, ephemeris data, etc. The acquisition and tracking data 130 and the motion data 132 are stored in the memory 118 and are accessed by the processor 116 to position the navigation apparatus 100.

The processor 116 can be a central processing unit (CPU), a microprocessor, a digital signal processor, or any other such device that can read and execute programming instructions. The memory 118 stores multiple machine-executable components that are executed by the processor 116. In one embodiment, the machine-executable components include a satellite positioning component 122, an inertial positioning component 124, a combination positioning component 126, and a data file 128. The data file 128 includes multiple machine-readable data sets such as the acquisition and tracking data 130 and the motion data 132, which can be read by the processor 116.

When executed by the processor 116, the satellite positioning component 122 calculates a position P1 associated with the navigation apparatus 100 at a current time t1 according to the acquisition and tracking data 130, e.g., the position P1 can be a GPS positioning result. The inertial positioning component 124 calculates a position P2 associated with the navigation apparatus 100 at the current time t1 according to the motion data 132, e.g., the position P2 can be a dead reckoning (DR) positioning result.

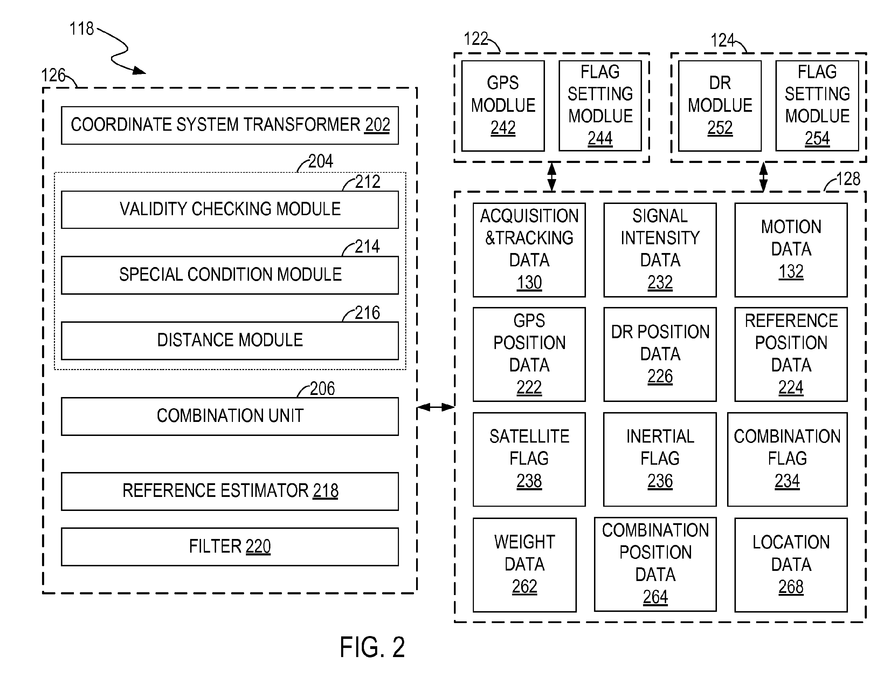

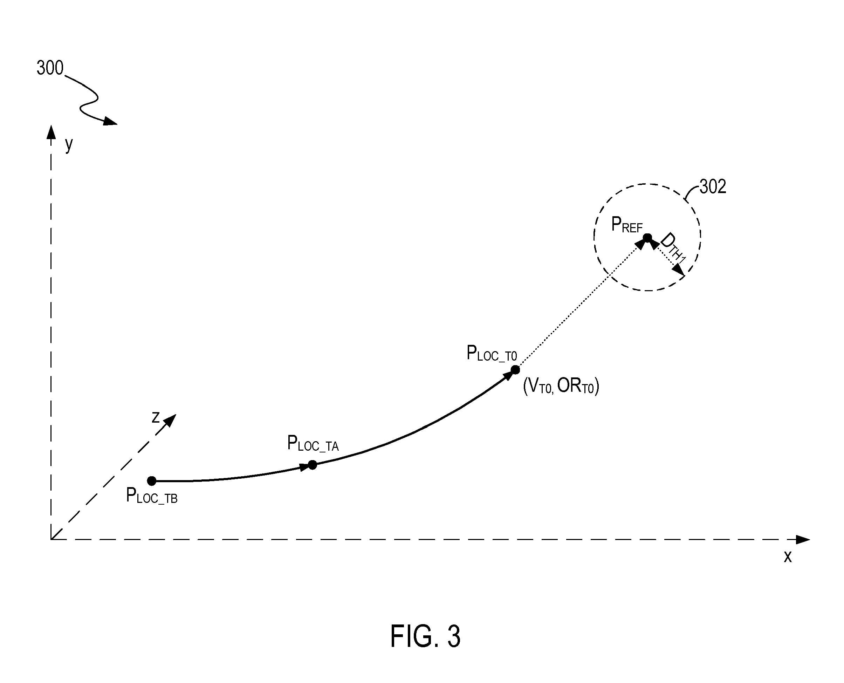

Advantageously, the combination positioning component 126 provides a reference position $P_{REF}$, combines the position P1 and the position P2 into a position P3 based on distances between the reference position $P_{REF}$, the position P1, and the position P2, and further determines the final location point $L_{T1}$ of the navigation apparatus 100 at time t1 based on the position P3. As will be further described in relation to FIG. 2 and FIG. 3, the distances between the reference position $P_{REF}$, the position P1, and the position P2 indicate the precisions of the positioning results generated by the satellite positioning component 122 and the inertial positioning component 124, no matter what may cause the inaccuracy of the position P1 and/or the position P2. For example, either a relatively poor position dilution of precision (PDOP) value of GPS or an error of the pseudo-range can cause a distance between the position P1 and the reference position $P_{REF}$ to be greater than a threshold $D_{TH1}$, which indicates that the position P1 is inaccurate. In this condition, the combination position P3 can be generated according to the position P2 rather than the position P1. Therefore, compared to the conventional navigation system, the accuracy of the navigation apparatus is improved.

FIG. 2 illustrates a block diagram of the memory 118, in an embodiment according to the present invention. Elements labeled the same as in FIG. 1 have similar functions. FIG. 2 is described in combination with FIG. 1.

In one embodiment, the memory 118 stores machine-executable components including a satellite positioning component 122, an inertial positioning component 124, and a combination positioning component 126. The memory 118 further stores a data file 128 including machine-readable data sets. As shown in the example of FIG. 2, the data file 128 includes acquisition and tracking data 130, signal intensity data 232, motion data 132, GPS position data 222, DR position data 226, reference position data 224, a satellite flag 238, an inertial flag 236, a combination flag 234, weight data 262, combination position data 264, and location data 268. The data file 128 can include other data sets and is not limited to the example of FIG. 2. The processor 116 accesses the data sets in the data file 128, and executes the machine-executable components to locate the navigation apparatus 100.

In one embodiment, the satellite positioning component 122 includes a GPS module 242 and a flag setting module 244. The GPS module 242, when executed by the processor 116, calculates the position P1 of the navigation apparatus 100 at the current time t1 according to the satellite signals 103. More specifically, in one embodiment, the GPS module 242 reads the acquisition and tracking data 130 from the data file 128, and receives the reference clock signal 136 generated by the timer 113. The GPS module 242 employs the reference clock signal 136 to extract a ranging code (e.g., a Coarse/Acquisition code) and navigation data from the acquisition and tracking data 130. The ranging code includes a pseudorandom noise code (PN or PRN code) that identifies a corresponding satellite. Each satellite has a unique pseudorandom noise code. Pseudoranges between the tracked GPS satellites and the GPS apparatus 100 can be obtained from the ranging code. The navigation data contains GPS date and time, ephemeris data indicating a position of a corresponding satellite, and almanac data indicating information and status concerning all the satellites. Geographical coordinates of the tracked GPS satellites can be obtained from the navigation data. As such, based on the obtained pseudoranges and the geographical coordinates associated with at least four GPS satellites, the GPS module 242 calculates the position P1 of the navigation apparatus 100, e.g., at a current time t1. For example, P1 can be represented by a set of coordinates (x1, y1, z1). In one embodiment, the GPS position data 222 in the data file 128 indicates position fixes calculated by the GPS module 242. Thus, the GPS module 242 updates the GPS position data 222 in the data file 128 with the coordinates (x1, y1, z1), such that the GPS position data 222 contains data indicating the position P1 calculated by the GPS module 242.

In one embodiment, the flag setting module 244 is executed by the processor 116 to control the satellite flag 238 and the signal intensity data 232 contained in the data file 128. The satellite flag 238 indicates the validity of the position P1. The signal intensity data 232 indicates the intensity level of the satellite signals 103. More specifically, in one embodiment, the flag setting module 244 checks if there is any abnormal condition associated with the GPS module 242 and sets the satellite flag 238 accordingly. For example, the flag setting module 244 identifies the number of visible satellites that are acquired and tracked, e.g., at time t1, according to the acquisition and tracking data 130. If the number of visible satellites is less than a predetermined value, e.g., four, the flag setting module 244 sets the satellite flag 238 to a first value, e.g., digital 0, to indicate that the position P1 is invalid.

Moreover, the flag setting module 244 identifies whether the position P1 is a wild point. A wild point represents a positioning point that apparently departs from the trace of the apparatus 100. For example, if the navigation apparatus 100 is on a mountain, and the position P1 indicates that the navigation apparatus 100 is in the ocean, then the calculated position P1 is a wild point. The flag setting module 244 sets the satellite flag 238 to the first value indicating that the position P1 is invalid if the position P1 is identified as a wild point. If, however, no abnormal conditions are discovered, the flag setting module 244 sets the satellite flag 238 to the second value (e.g., digital one) indicating that the position P1 is valid.

In one embodiment, the flag setting module 244 identifies the intensity level of the satellite signals 103 according to the acquisition and tracking data 130 and sets the signal intensity data 232 according to the intensity level. By way of example, the signal intensity data 232 can be set to 1 and 2 indicating that the intensity of the satellite signals 103 is weak and strong, respectively. The intensity of the satellite signals 103 affects the precision of the GPS positioning result P1. For example, the position P1 can be more accurate when the signal intensity data 232 has the value 2 than when the signal intensity data 232 has the value 1.

In one embodiment, the inertial positioning component 124 includes a DR module 252 and a flag setting module 254. The DR module 252, when executed by the processor 116, estimates the position P2 associated with the navigation apparatus 100 at the current time t1 according to the motion data 132 and a previous position fix, e.g., calculated at a previous time t0 prior to the current time t1. In one embodiment, the DR position data 226 stored in the data file 128 indicates the position fix calculated by the DR module 252, e.g., the position P2.

In one embodiment, the DR module 252 selects the previous position according to the signal intensity data 232 and the satellite flag 238. More specifically, if the signal intensity data 232 indicates that the intensity of the satellite signals 103 is strong at time t0, and if the satellite flag 238 indicates that the position $P_{1\_T0}$ is valid at time t0, the DR module 252 reads the GPS position data 222 from the data file 128 to obtain the position fix $P_{1\_T0}$. Then, the DR module 252 reads the motion data 132 from the data file 128 to acquire the speed and the orientation of the navigation apparatus 100 at time t0. Based on the speed, the orientation, and the position fix $P_{1\_T0}$, the DR module 252 calculates a position $P_{2\_T1}$ at time t1.

If the signal intensity data 232 indicates that the intensity of the satellite signals 103 is weak at time t0, or if the satellite flag 238 indicates that the position $P_{1\_T0}$ is invalid at time t0, the DR module 252 reads the DR position data 226 from the data file 128 to obtain the position fix $P_{2\_T0}$ that is calculated by the DR module 252 at time t0. Furthermore, the DR module 252 reads the motion data 132 from the data file 128 to acquire the speed and the orientation of the navigation apparatus 100 at time t0. Based on the speed, the orientation, and the position fix $P_{2\_T0}$, the DR module 252 calculates the position $P_{2\_T1}$ associated with the navigation apparatus 100 at time t1. Therefore, if the satellite signals 103 remain at a low intensity level or the position P1 remains invalid, then the DR module 252 continues to estimate the DR positioning result according to a previous DR positioning result as time passes. Because of errors associated with the speedometer and the gyroscope, the error of the positions calculated by the DR module 252 accumulates under those circumstances.

In both circumstances, the position P2 can be represented by a set of coordinates (x2, y2, z2). In one embodiment, the DR module 252 updates the DR position data 226 with the coordinates (x2, y2, z2), such that the DR position data 226 includes data indicating the position P2 at time t1.

The flag setting module 254 is executed by the processor 116 to control the inertial flag 236 contained in the data file 128, in one embodiment. Similar to the flag setting module 244, the flag setting module 254 checks whether an abnormal condition is associated with the motion sensor 106, and sets the inertial flag 236 accordingly. By way of example, the motion sensor 106 including the speedometer and the gyroscope perform self-examinations once the sensors 106 are powered up. The flag setting module 254 analyzes the motion data 132 to check whether the self-examinations have been finished. If either the speedometer or the gyroscope is running the self-examination, the flag setting module 254 sets the inertial flag 236 to one value (which may also be referred to herein as the third value), e.g., digital zero, indicating that the position P2 is invalid. If the self-examinations are finished and no other abnormal condition is present, then the flag setting module 254 sets the inertial flag 236 to a different value (which may also be referred to herein as the fourth value), e.g., digital one, indicating that the position P2 is valid.

The combination positioning component 126 is operable for combining the position P1 and the position P2 into the position P3. In one embodiment, the combination positioning component 126 includes a coordinate system transformer 202. In one embodiment, the position P1 and the position P2 are generated in accordance with different coordinate systems. For example, the coordinates (x1, y1, z1) are calculated by the GPS module 242 in an Earth-Centered Earth-Fixed (ECEF) coordinate system. The coordinates (x2, y2, z2) are calculated by the DR module 252 in a North East Up (NEU) coordinate system. If the positioning results from the GPS module 242 and the DR module 252 are generated in different coordinate systems, the coordinate system transformer 202 transforms coordinates in one system to corresponding ones in the other. In one embodiment, the coordinate system transformer 202 transforms the coordinates (x2, y2, z2) in the NEU system to corresponding coordinates (x2', y2', z2') in the ECEF system. Alternatively, the coordinate system transformer 202 transforms the coordinates (x1, y1, z1) in the ECEF system to corresponding coordinates (x1', y1', z1') in the NEU system. As such, the position P1 and the position P2 are labeled in the same coordinate system, which makes the combination operations more convenient.

In one embodiment, the combination positioning component 126 further includes a weight unit 204, a combination unit 206, a reference estimator 218, and a filter 220. The weight unit 204 provides weight data 262 indicating weights A1 and A2 for the positions P1 and P2. In one embodiment, the weight A1 or A2 has a value between 0 and 100% and a sum of the weights A1 and A2 is equal to 1. The weights A1 and A2 are used to represent the relative importance of the position P1 and P2 when generating the combination position P3.

Upon obtaining the weights A1 and A2, the combination unit 206 combines the positions P1 and P2 into the position fix P3. In one embodiment, the combination unit 206 weights the positions P1 and P2 to provide weighted positions A1* P1 and A2 * P2, and combines the weighted positions to obtain the position P3. Assuming the combination operation is performed in the ECEF coordinate system, the position P3 can be given according to equation (1):

$$P3 = A1* P1 + A2 * P2 = (A1*x1+A2*x2', A1*y1+A2*y2', A1*z1+A2*z2'). \quad (1)$$

According to equation (1), if A1 is equal to 100% and A2 is 0%, the position P3 is generated fully relying on the position P1 generated by the GPS module 242. If A1 is equal to 0% and A2 is 100%, the position P3 is generated fully relying on the position P2 generated by the DR module 252. Moreover, if both A1 and A2 are equal to an amount greater than 0% and less than 100%, the position P3 is generated relying on both the position P1 and the position P2. In this condition, if A1 is greater than A2, the position P3 is generated relying on the position P1 more than the position P2, and vice versa. In one embodiment, the combination unit 206 updates the combination position data 264 with the coordinates (A1*x1+A2*x2', A1*y1+A2*y2', A1*z1+A2*z2'), such that the combination position data 264 includes data indicating the position P3 at time t1.

In one embodiment, the weight unit 204 includes a validity checking module 212, a special condition module 214, and a distance module 216. The validity checking module 212 accesses the satellite flag 238 and the inertial flag 236 to check the validity of the position P1 and the position P2, and determines the weights A1 and A2 accordingly. The special condition module 214 checks whether the navigation apparatus 100 matches one or more predetermined conditions, and determines the weights A1 and A2 accordingly. The distance module 216 determines the weights A1 and A2 according to the distances between the position P1, the position P2, and the reference position $P_{REF}$.

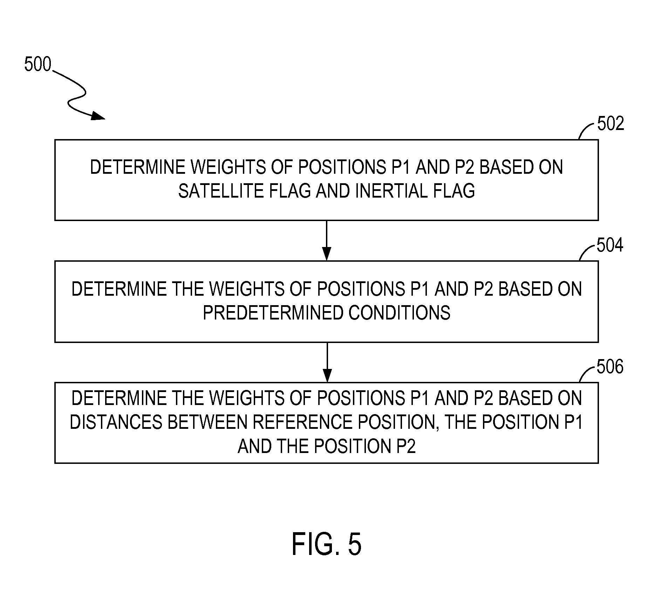

In one embodiment, the weight unit 204 updates the combination flag 234 indicative of the validity of the combination position P3. In one embodiment, if the combination flag 234 has one value (which may also be referred to herein as the fifth value), e.g., digital one, it indicates that the position P3 is valid. If the combination flag 234 has a different value (which may also be referred to herein as the sixth value), e.g., digital zero, it indicates that the position P3 is invalid. The operations of the weight unit 204 are further described in relation to FIG. 5-FIG. 8.

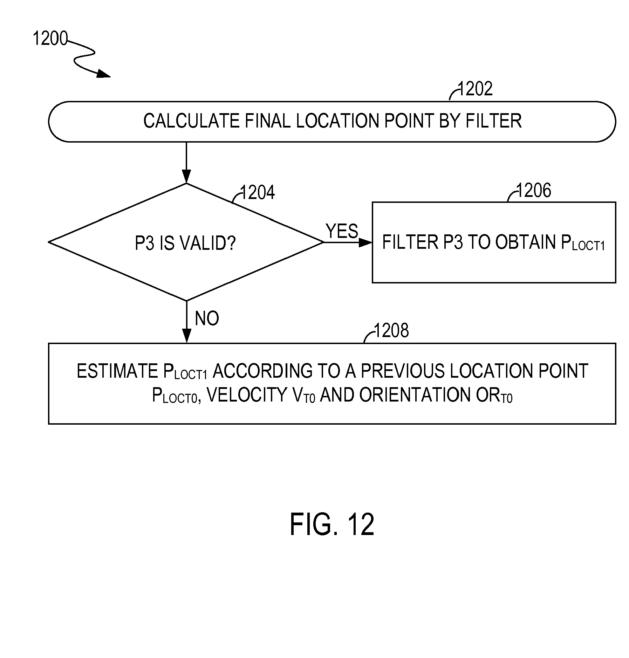

The filter 220 can be, but is not limited to, a Kalman filter, and is capable of checking the combination flag 234, and filtering the position P3 to obtain the final location point $P_{LOC\_T1}$ at time t1 if the combination flag 234 indicates that the position P3 is valid. More specifically, in one embodiment, the location data 268 in the data file 128 indicates the final location point at each time point, e.g., at times $t_B$, $t_A$, and t0 that are prior to the current time t1. The filter 220 accesses the location data 268 to obtain the location points at previous times $t_B$, $t_A$, and t0, and filters the position P3 accordingly to provide the final location point $P_{LOC\_T1}$. Therefore, the track of the navigation apparatus 100 including the location points at times $t_B$, $t_A$, t0 and t1 can be smoothed. If the combination flag 234 indicates that the position P3 is invalid, then the filter 220 does not use the position P3. Instead, the filter 220 estimates the location point $P_{LOC\_T1}$ based on the previous position point $P_{LOC\_T0}$, as is further described in relation to FIG. 12. Furthermore, the filter 220 updates the location data 268 with the location point $P_{LOC\_T1}$, such that the location data 268 includes data indicating the location point $P_{LOC\_T1}$.

In one embodiment, the reference position data 224 indicates the reference position $P_{REF}$. The reference estimator 218 provides a reference position $P_{REF}$ associated with the navigation apparatus 100 at the current time t1, and updates the reference position data 224 accordingly. The operations of the reference estimator 218 are further described in relation to FIG. 3.

FIG. 3 illustrates an example of a travel track 300 of the navigation apparatus 100, in an embodiment according to the present invention. FIG. 3 is described in combination with FIG. 2. FIG. 3 shows the location points $P_{LOC\_TB}$, $P_{LOC\_TA}$, and $P_{LOC\_T0}$ indicated by the location data 268 at time $t_B$, $t_A$ and t0, respectively, where $t_B$ is prior to $t_A$, and $t_A$ is prior to t0. FIG. 3 describes how to calculate the reference position $P_{REF\_T1}$ at time t1.

In one embodiment, the reference estimator 218 accesses the location data 268 to obtain the previous location point $P_{LOC\_T0}$, and accesses the motion data 132 to obtain the speed $V_{TO}$ and the orientation $OR_{T0}$ measured by the motion sensor 106. Then, the reference estimator 218 estimates the reference position $P_{REF\_T1}$ based on the previous location point $P_{LOC\_T0}$, the speed $V_{T0}$ and the orientation $OR_{T0}$.

In an alternative embodiment, the speed $V_{T0}$ is a combination speed, and the orientation $OR_{T0}$ is a combination orientation. More specifically, the GPS module 242 calculates a GPS speed and a GPS orientation for the navigation apparatus 100 at time t0. The motion sensor 106 measures the DR speed and the DR orientation for the navigation apparatus 100 at time t0. The reference estimator 218 combines the GPS speed and the DR speed into the speed $V_{T0}$, and combines the GPS orientation and the DR orientation into the orientation $OR_{T0}$. Then, the reference estimator 218 calculates the reference position $P_{REF\_T1}$ based on the previous location point $P_{LOC\_T0}$, the speed $V_{T0}$, and the orientation $OR_{T0}$.

Advantageously, since the reference position $P_{REF\_T1}$ is estimated according to the final location point, the speed, and the orientation at the previous time t0, an accurate GPS or DR positioning result is expected to be within a predetermined distance from the reference position $P_{REF\_T1}$. As shown in the example of FIG. 3, if a distance $D_{PREF-P1}$ between the position fix P1 and the reference position $P_{REF}$ is greater than a threshold $D_{TH1}$, e.g., the position fix P1 lies out of the range 302 when the intensity of the satellite signals 103 is weak, then the position fix P1 can be regarded as inaccurate. If the distance $D_{PREF-P1}$ is less than the threshold $D_{TH1}$, e.g., the position fix P1 lies within the range 302, then the position fix P1 can be regarded as accurate. Likewise, if a distance $D_{PREF-P2}$ between the position fix P2 and the reference position $P_{REF}$ is greater than a threshold $D_{TH1}$, then the position fix P2 can be regarded as inaccurate. If the distance $D_{PREF-P2}$ is less than the threshold $D_{TH1}$, then the position fix P2 can be regarded as accurate.

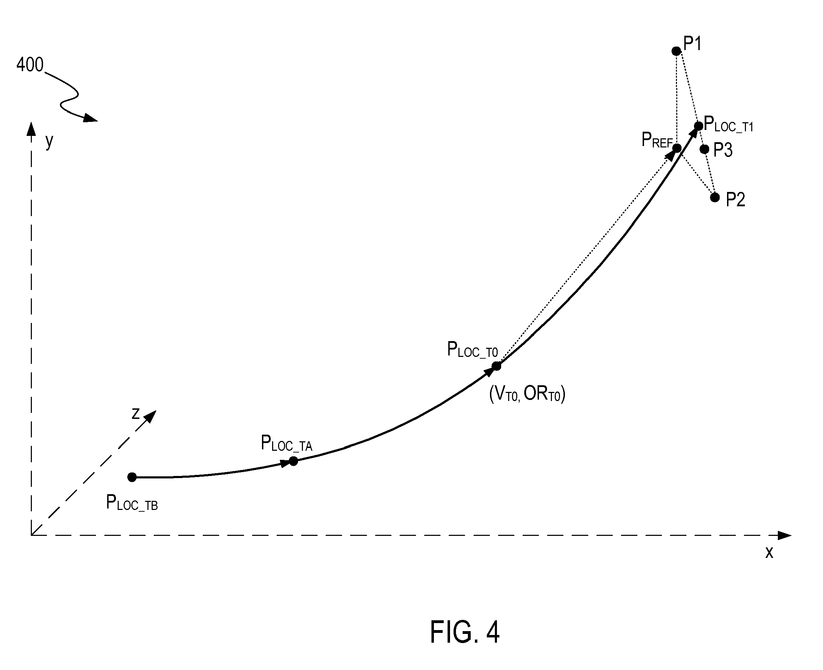

FIG. 4 illustrates another example of a travel track 400 of the navigation apparatus 100, in an embodiment according to the present invention. FIG. 4 is described in combination with FIG. 2 and FIG. 3. FIG. 4 describes how to calculate the location point $P_{LOC-T1}$ at the current time t1.

Similar to the travel track 300 in FIG. 3, the reference estimator 218 provides the reference position $P_{REF}$ at time t1 based on the previously location point $P_{LOC\_T0}$, the velocity $V_{T0}$, and the orientation $OR_{T0}$. The GPS module 242 calculates the position P1 according to the acquisition and tracking data 130. The DR module 244 calculates the position P2 according to the motion data 132. The combination unit 206 combines the position P1 and the position P2 into the position P3. The filter 220 filters the position P3 based on the previous location points $P_{LOC\_TB}$, $P_{LOC\_TA}$ and $P_{LOC\_T0}$ to locate the navigation apparatus 100 at position $P_{LOC\_T1}$, such that the travel track 400 is smoothed.

FIG. 5 illustrates a flowchart 500 of operations performed by the weight unit 204, in an embodiment according to the present invention. FIG. 5 is described in combination with FIG. 2. FIG. 5 describes how to determine the weights A1 and A2 of the positions P1 and P2.

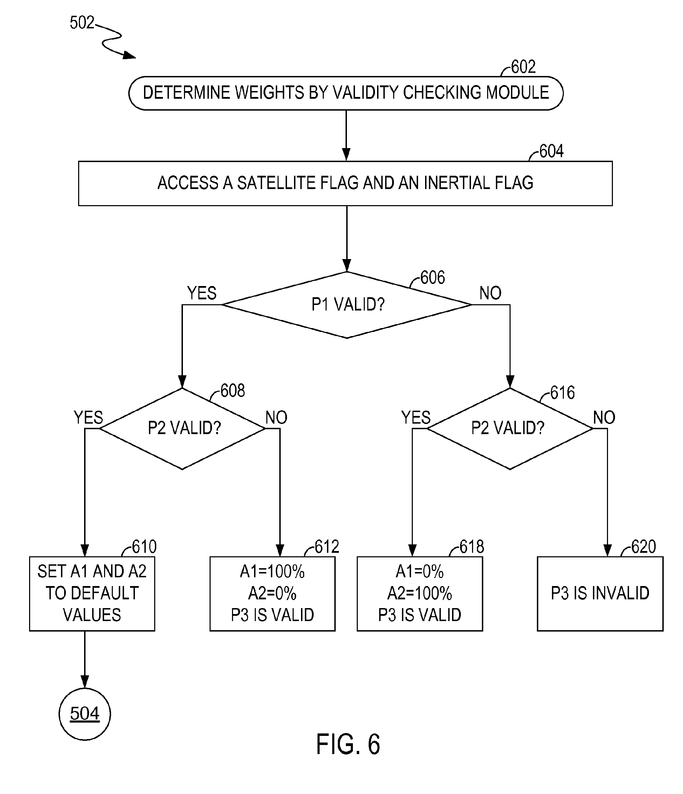

At step 502, the validity checking module 212 determines the weights A1 and A2 based on the satellite flag 238 and the inertial flag 236. At step 504, the special condition module 214 checks whether the navigation apparatus (e.g., apparatus 100 of FIG. 1) is in a predetermined condition and determines the weights A1 and A2 accordingly. At step 506, the distance module 216 determines the weights A1 and A2 based on distances between the reference position $P_{REF}$, the position P1 and the position P2. The steps 502, 504 and 506 correspond to the flowcharts 502, 504 and 506 as further described in relation to FIG. 6, FIG. 7 and FIG. 8, respectively.

FIG. 6 illustrates a flowchart 502 of operations performed by the validity checking module 212, in an embodiment according to the present invention. FIG. 6 is described in combination with FIG. 2 and FIG. 5. The flowchart 502 describes how the validity checking module 212 determines the weights A1 and A2 as illustrated in relation to step 502 in FIG. 5.

At step 602, the validity checking module 212 starts to determine weights A1 and A2 of the positions P1 and P2. At step 604, the validity checking module 212 accesses the satellite flag 238 and the inertial flag 236.

At step 606, the validity checking module 212 checks whether the position P1 is valid according to the satellite flag 238. If the position P1 is valid, the flowchart 502 goes to step 608. If position P1 is invalid, the flowchart 502 goes to step 616.

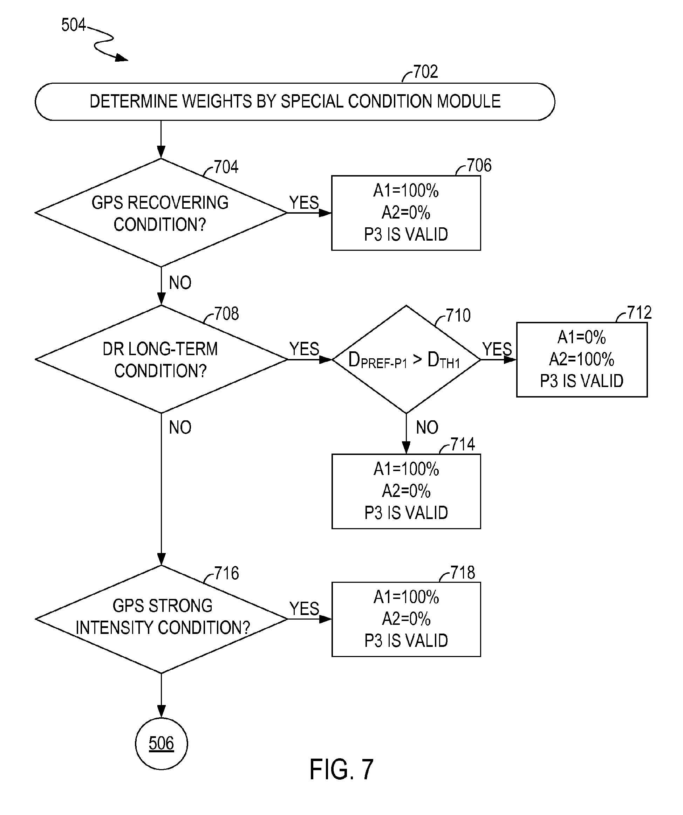

At step 608, the validity checking module 212 checks whether the position P2 is valid according to the inertial flag 236. If the position P2 is valid (both P1 and P2 are valid), the validity checking module 212 sets the weights A1 and A2 to default values, e.g., 50% and 50%, at step 610. Then, the flowchart 502 goes to the step 504 (in FIG. 5 or FIG. 7), such that the special condition module 214 and the distance module 216 can determine the weights A1 and A2. If the position P2 is invalid (P1 is valid and P2 is invalid), the validity checking module 212 sets the weight A1 to 100% and sets the weight A2 to 0% at step 612. In addition, the validity checking module 212 sets the combination flag 234 to the fifth value indicating that the position P3 is valid.

At step 616, the validity checking module 212 checks whether the position P2 is valid according to the inertial flag 236. If the position P2 is valid (P1 is invalid and P2 is valid), the validity checking module 212 sets the weight A1 to 0% and sets the weight A2 to 100% at step 618. Then, the validity checking module 212 sets the combination flag 234 to the fifth value indicating that P3 is valid. If the position P2 is invalid (both P1 and P2 are invalid), the validity checking module 212 sets the combination flag 234 to the sixth value to indicate that the position P3 is invalid at step 620. As shown at steps 612 and 618, if one module of the GPS module 242 and the DR module 252 generates an invalid positioning result, the position P3 is generated totally relying on the result from the other module. In both circumstances, the combination flag 234 indicates that the position P3 is valid.

FIG. 7 illustrates a flowchart 504 of operations performed by the special condition module 214, in an embodiment according to the present invention. FIG. 7 is described in combination with FIG. 2, FIG. 3, FIG. 5 and FIG. 6. The flowchart 504 describes how the special condition module 214 determines the weights A1 and A2 as mentioned at step 504 in FIG. 5. As described in relation to FIG. 5 and FIG. 6, the flowchart 500 enters the step 504 if the validity checking module 212 identifies that both the positions P1 and P2 are valid according to the satellite flag 238 and the inertial flag 236, in one embodiment.

At step 702, the special condition module 214 starts to determine the weights A1 and A2 by checking whether the navigation apparatus 100 is in one of multiple predetermined conditions. In one embodiment, the predetermined conditions include a GPS recovering condition, a DR long-term condition, and a GPS strong intensity condition.

At step 704, the special condition module 214 checks whether the GPS is in the recovering condition, as about to be described. When the navigation apparatus 100 is in inaccessible places such as parking garages, tunnels, urban canyons, and near trees, the satellite signals 103 may be unavailable or degraded. The satellite flag 238 is set to a value indicating that the position P1 is invalid. As discussed in relation to FIG. 2 and FIG. 6, the validity checking module 212 sets the weight A1 to 0% and sets the weight A2 to 100%, and the combination result is generated fully relying on the position P2 calculated by the DR module 252. If the navigation apparatus 100 remains in an inaccessible place, an error of position P2 calculated by the DR module 252 increases over time. When the satellite signals 103 become visible, the satellite flag 238 can be switched to the second value indicating that the position P1 becomes valid again. In order to correct the error of the DR module 252, the special condition module 214 is capable of setting the weights A1 and A2 to determine the position P3 fully based on the GPS result P1 for a predetermined time period $T_{TH1}$.

In one embodiment, the special condition module 214 initiates a first timer according to the reference clock signal 136 once the satellite flag 238 is switched from the first value to the second value, so as to measure the time period T1 during which the position P1 remains valid after becoming valid. The special condition module 214 further compares the time period T1 with the predetermined time threshold $T_{TH1}$. If the time period T1 is less than the time threshold $T_{TH1}$, it indicates that the navigation apparatus 100 is in the GPS recovering condition.

Therefore, if the GPS recovering condition is indentified at step 704, then the flowchart 504 goes to step 706. Otherwise, the flowchart 504 goes to step 708. At step 706, the weight A1 is set to 100%, the weight A2 is set to 0%, and the combination flag 234 is set to the fifth value indicating that position P3 is valid.

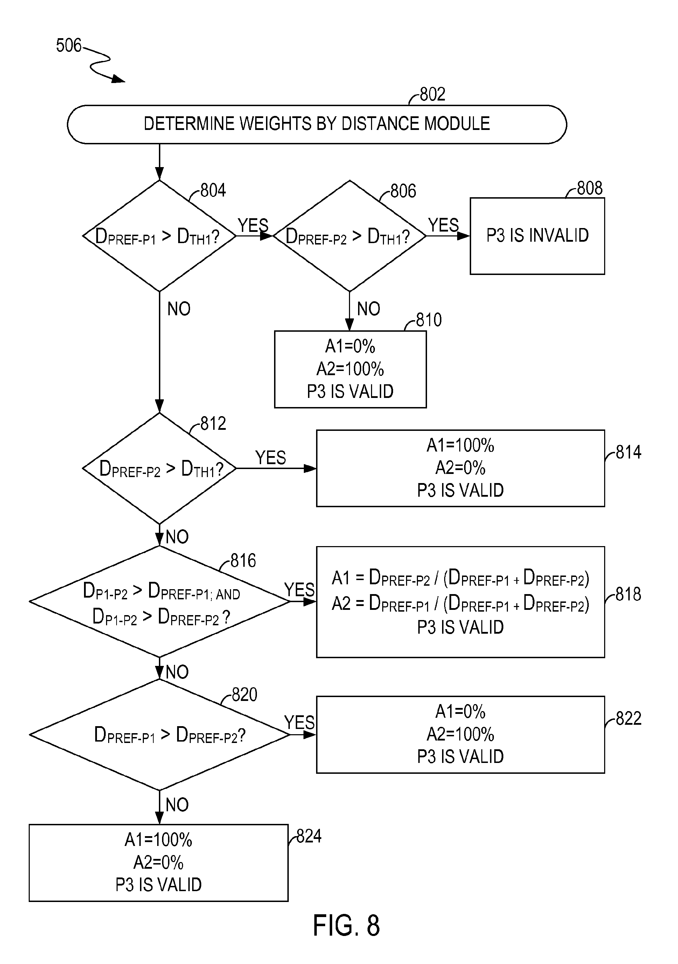

At step 708, the special condition module 214 checks whether the DR long-term condition is present. As discussed in relation to FIG. 2 and FIG. 3, weak satellite signals 103 may cause the position P1 to become inaccurate, e.g., the position P1 lies out of the range 302 as shown in FIG. 3. Then, the position P3 is calculated fully relying on the position P2, as is further described in relation to FIG. 8. The position P2 has an error which increases over time. Thus, if such status (in which the position P3 is still calculated totally relying on only the position P2) remains for a relatively long time, e.g., longer than $T_{TH2}$, a check is performed to determine whether the intensity of the satellite signals 103 has strengthened and, thus, the accuracy of the GPS has improved.

In one embodiment, the special condition module 214 initiates a second timer according to the reference clock signal 136 to measure the time period T2 when the signal intensity data 232 indicates that the intensity of the satellite signals 103 is weak. The special condition module 214 further compares the time period T2 with the predetermined time threshold $T_{TH2}$. If the time period T2 is greater than $T_{TH2}$, it indicates that the navigation apparatus 100 is in the DR long-term condition. In one embodiment, if the DR long-term condition is identified at step 708, the flowchart 504 enters step 710. Otherwise, the flowchart 504 enters step 716.

At step 710, the special condition module 214 compares a distance $D_{PREFP1}$ between the reference position $P_{REF}$ and the position P1 with a threshold $D_{TH1}$. If the distance $D_{PREF-P1}$ is greater than the threshold $D_{TH1}$, it indicates that the position P1 is still inaccurate. Thus, the special condition module 214 sets the weight A1 to 0%, sets the weight A2 to 100%, and sets the combination flag 234 to the fifth value indicating that the position P3 is valid, at step 712. If the distance $D_{PREF-P1}$ is less than the threshold $D_{TH1}$, it indicates that the position P1 is now accurate under the DR long-term condition. Thus, the special condition module 214 sets the weight A1 to 100%, sets the weight A2 to 0%, and sets the combination flag 234 to the fifth value indicating that the position P3 is valid, at step 714.

At step 716, the special condition module 214 checks whether the GPS strong intensity condition occurs. In one embodiment, if the signal intensity data 232 indicates that the intensity of the satellite signals 103 is strong, then the special condition module 214 determines that the GPS strong intensity condition is present. Then, the special condition module 214 sets the weight A1 to 100%, sets the weight A2 to 0%, and sets the combination flag 234 to the fifth value indicating that the position P3 is valid at step 718. If no special condition is identified by the special condition module 214, the flowchart 504 goes to the step 506, e.g., flowchart 506, such that the distance module 216 is capable of determining the weights A1 and A2.

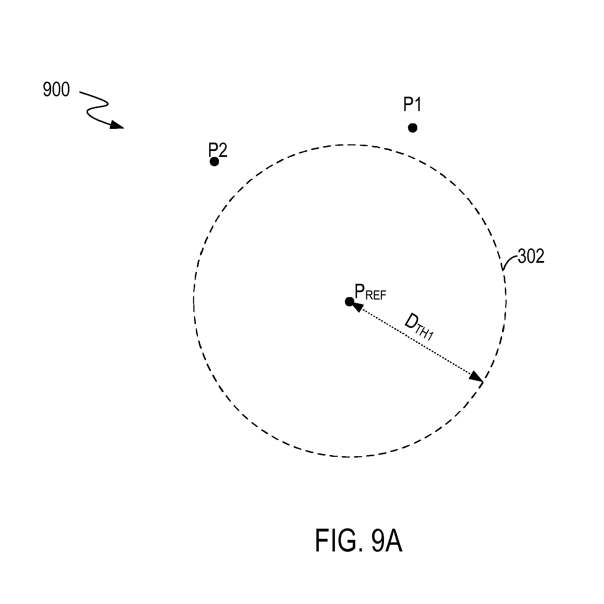

FIG. 8 illustrates a flowchart 506 of operations performed by the distance module 216, in an embodiment according to the present invention. The flowchart 506 describes how the distance module 216 determines the weights A1 and A2 as mentioned at step 506 in FIG. 5. As described in relation to FIG. 5 - FIG. 7, the flowchart 500 enters the flowchart 506 after the validity checking module 212 identifies that both the positions P1 and P2 are valid and the special condition module 214 discovers no predetermined condition, in one embodiment. FIG. 9A, FIG. 9B, FIG. 9C, FIG. 10 and FIG. 11 are diagrams 900, 902 and 904 illustrating examples of the reference position $P_{REF}$, the position P1, and the position P2, in embodiments according to the present invention. FIG. 8 is described in combination with FIG. 2, FIG. 5 - FIG. 7 and FIG. 9-FIG. 11.

At step 802, the distance module 216 starts to determine the weights A1 and A2. The distance module 216 sets the weights A1 and A2 according to the distances between the position P1, the position P2, and the reference position $P_{REF}$ at the current time t1. In one embodiment, the distance module 216 compares a distance $D_{PREF-P1}$ between the reference position $P_{REF}$ and the position P1 with a threshold $D_{TH1}$, compares a distance $D_{PREF-P2}$ between the reference position $P_{REF}$ and the position P2 with the threshold $D_{TH1}$, and sets the weights A1 and A2 based on results of the comparisons. In one embodiment, the distance module 216 compares a distance $D_{P1-P2}$ between the position P1 and the position P2 to the distance $D_{PREF-P1}$, compares a distance $D_{P1-P2}$ between the position P1 and the position P2 to the distance $D_{PREF-P2}$, and sets the weights A1 and A2 based on results of the comparisons. In one embodiment, the distance module 216 compares the distance $D_{PREF-P1}$ to the distance $D_{PREF-P2}$, and sets the weights A1 and A2 based on a result of the comparison.

At step 804, the distance module 216 compares the distance $D_{PREF-P1}$ with the threshold $D_{TH1}$. If the distance $D_{PREF-P1}$ is greater than the threshold $D_{TH1}$, the flowchart 506 goes to step 806. Otherwise, the flowchart 506 goes to step 812. At step 806, the distance module 216 compares the distance $D_{PREF-P2}$ with the threshold $D_{TH1}$. The flowchart 506 goes to the step 808 if the distance $D_{PREF-P2}$ is greater than the threshold $D_{TH1}$, and goes to the step 810 if the distance $D_{PREF-P2}$ is less than the threshold $D_{TH1}$. At step 812, the distance module 216 compares the distance $D_{PREF-P2}$ with the threshold $D_{TH1}$. The flowchart 506 goes to the step 814 if the distance $D_{PREF-P2}$ is greater than the threshold $D_{TH1}$, and goes to the step 816 if the distance $D_{PREF-P2}$ is less than the threshold $D_{TH1}$.

Referring to the diagram 900 in FIG. 9A, both the positions P1 and P2 are out of the range 302; that is, the distance $D_{PREF-P1}$ is greater than the threshold $D_{TH1}$, and the distance $D_{PREF-P2}$ is greater than the threshold $D_{TH1}$. As such, both the positions P1 and P2 are inaccurate, as discussed in relation to FIG. 3. Therefore, at step 808, the distance module 216 assigns the sixth value to the combination flag 234 to indicate that the position P3 is invalid.

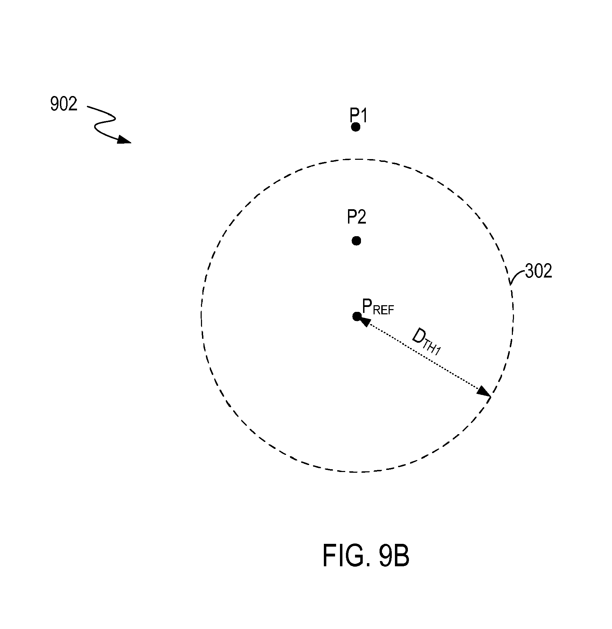

Referring to the diagram 902 in FIG. 9B, the position P1 is out of the range 302 and the position P2 is within the range 302. In other words, the distance $D_{PREF-P1}$ is greater than the threshold $D_{TH1}$, and the distance $D_{PREF-P2}$ is less than the threshold $D_{TH1}$. As such, the position P1 is inaccurate and the position P2 is accurate. Therefore, at step 810, the distance module 216 sets the weight A1 to 0%, sets the weight A2 to 100%, and assigns the fifth value to the combination flag 234 to indicate that the position P3 is valid.

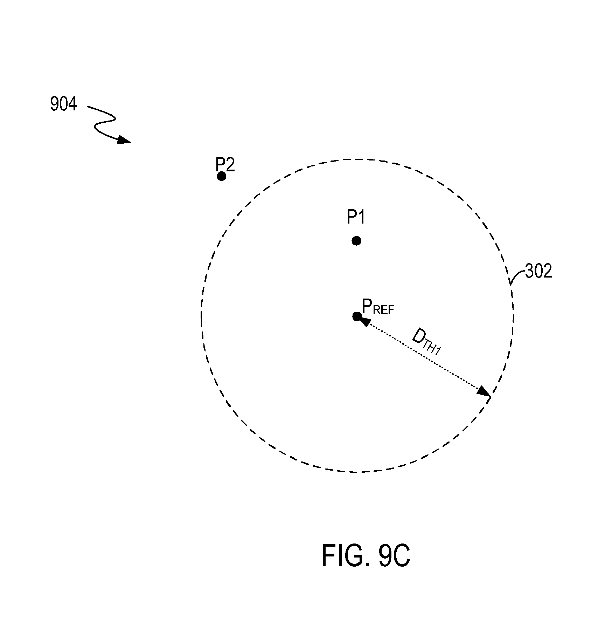

Referring to the diagram 904 in FIG. 9C, the position P1 is within the range 302, and the position P2 is out of the range 302. In other words, the distance $D_{PREF-P1}$ is less than the threshold $D_{TH1}$, and the distance $D_{PREF-P2}$ is greater than the threshold $D_{TH1}$. As such, the position P1 is accurate and the position P2 is inaccurate. Therefore, at step 814, the distance module 216 sets the weight A1 to 100%, sets the weight A2 to 0%, and assigns the fifth value to the combination flag 234 to indicate that the position P3 is valid.

Various undesirable conditions may cause the position fix P1 or P2 to be out of the range 302, for any number of reasons. For example, either a relative poor position dilution of precision (PDOP) value of GPS or an error of the pseudo-range can cause the position P1 to be out of the range 302. Advantageously, all the undesirable conditions can be detected by the distance module 216. Therefore, the accuracy of the navigation apparatus 100 is improved.

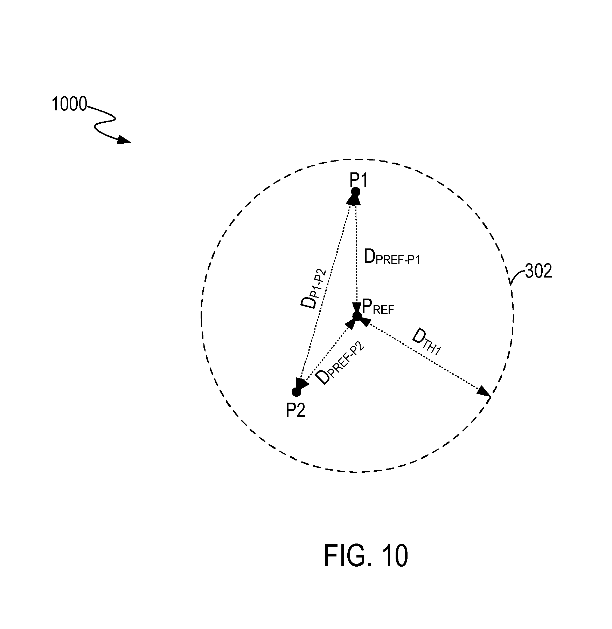

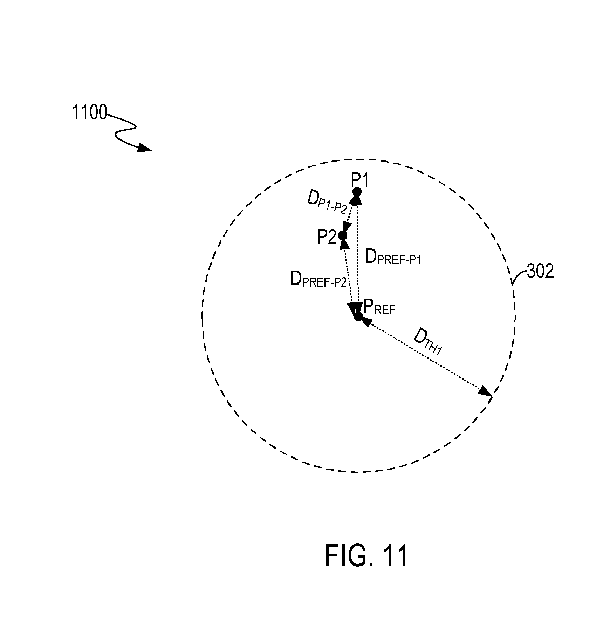

The diagrams 1000 and 1100 in FIG. 10 and FIG. 11 show conditions when both the positions P1 and P2 are within the range 302, that is, both the positions P1 and P2 are accurate with regard to the reference position $P_{REF}$. In such circumstances, the distance module 216 determines the weights A1 and A2 following steps 816-824 of FIG. 8.

At step 816, the distance module 216 compares the distance $D_{P1-P2}$ to the distance $D_{PREF-P1}$, and compares the distance $D_{P1-P2}$ to the distance $D_{PREF-P2}$. If the distance $D_{P1-P2}$ is greater than the distance $D_{PREF-P1}$, and if the distance $D_{P1-P2}$ is greater than the distance $D_{PREF-P2}$, the flowchart 506 jumps to the step 818. Otherwise, the flowchart 506 enters the step 820. Referring to the diagram 1000 in FIG. 10, the distance $D_{P1-P2}$ is greater than the distance $D_{PREF-P1}$, and the distance $D_{P1-P2}$ is greater than the distance $D_{PREF-P2}$. In this condition, both the positions P1 and P2 are accurate. Also, the positions P1 and P2 are located in approximately opposite directions with regard to the reference position $P_{REF}$. Thus, the position P3 is provided by considering both the position P1 and the position P2. Therefore, at step 818, the weight A1 is set to an amount that is equal to the distance $D_{PREF-P2}$ divided by a sum of the distance $D_{PREFP1}$ and the distance $D_{PREF-P2}$. The weight A2 is set to an amount that is equal to the distance $D_{PREF-P1}$ divided by a sum of the distance $D_{PREF-P1}$ and the distance $D_{PREF-P2}$. Additionally, the distance module 216 assigns the fifth value to the combination flag 234 to indicate that the position P3 is valid.

Advantageously, according to step 818, both the weights A1 and A2 are greater than 0% and less than 100%, which means that the position P3 is generated relying on the both the positions P1 and P2. Moreover, if the distance $D_{PREF-P1}$ is less than the distance $D_{PREF-P2}$, then the weight A1 is greater than the weight A2. In other words, if the position P1 is closer to the reference position $P_{REF}$ compared to the position P2, the position P3 can be calculated relying more on the position P1 than on the position P2. Likewise, if the distance $D_{PREF-P1}$ is greater than the distance $D_{PREF-P2}$, then the weight A1 is less than the weight A2, such that the position P3 can be calculated relying more on the position P2 than on the position P1. Therefore, the accuracy of the navigation apparatus 100 is further improved.

At step 820, the distance module 216 compares the distance $D_{PREF-P1}$ to the distance $D_{PREF-P2}$. If the distance $D_{PREF-P1}$ is greater than the distance $D_{PREF-P2}$, the flowchart 506 goes to the step 822. If the distance $D_{PREF-P1}$ is less than the distance $D_{PREF-P2}$, the flowchart 506 goes to the step 824. Referring to the diagram 1100 in FIG. 11, the distance $D_{P1-P2}$ is less than the distance $D_{PREF-P1}$, and/or the distance $D_{PREF-P2}$. That is, the position P1 and the position P2 are located in approximately the same direction with regard to the reference position $P_{REF}$. Therefore, the position P1 or P2 that is closer to the reference position $P_{REF}$ should be more accurate. As shown in FIG. 11, the distance $D_{PREF-P1}$ is greater than the distance $D_{PREF-P2}$. Thus, according to the step 822, the distance module 216 sets the weight A1 to 0%, sets the weight A2 to 100%, and assigns the fifth value to the combination flag 234 to indicate that the position P3 is valid. In another embodiment, the distance $D_{PREF-P1}$ is less than the distance $D_{PREF-P2}$. Thus, according to the step 824, the distance module 216 sets the weight A1 to 100%, sets the weight A2 to 0%, and assigns the fifth value to the combination flag 234 to indicate that the position P3 is valid.

Advantageously, according to the flowcharts in FIG. 5 - FIG. 8, various conditions are considered when the navigation apparatus 100 determines the weights for combining the position P1 provided by the GPS module 242 and the position P2 provided by the DR module 252. Compared to a conventional navigation system, the accuracy of the navigation apparatus 100 is enhanced.

FIG. 12 illustrates a flowchart 1200 of operations performed by the filter 220, in an embodiment according to the present invention. The flowchart 1200 describes how the filter 220 calculates the final location point $P_{LOT\_T1}$. FIG. 12 is described in combination with FIG. 2, and FIG. 6-FIG. 8.

At step 1202, the filter 220 starts to calculate the final location point $P_{LOT\_T1}$. At step 1204, the filter 220 reads the combination flag 234 indicating the validity of the combination position P3. As described in relation to FIG. 6- FIG. 8, the weight unit 204 assigns the fifth value or the sixth value to the combination flag 234 when determining the weights A1 and A2. If the weight unit 204 has the fifth value indicating that the position P3 is valid, the flowchart 1200 goes to step 1206. At step 1206, the filter 220 accesses the combination position data 264 to obtain the position P3 and filters the position P3 according to the previous location points $P_{LOC\_TB}$, $P_{LOC\_TA}$ and $P_{LOC\_T0}$, such that the track of the navigation apparatus 100 is smoothed.

If the weight unit 204 has the sixth value indicating that the position P3 is invalid at step 1204, then the flowchart 1200 jumps to step 1208. At step 1208, the filter 220 does not use the combination position P3. Instead, the filter 220 reads the location data 268 from the data file 128 to obtain the previous location point $P_{LOC\_T0}$, and reads the motion data 132 from the data file 128 to obtain the velocity $V_{TO}$ and the orientation $OR_{TO}$ that are measured by the motion sensor 106 at the previous time t0. In one embodiment, the location point $P_{LOC\_T0}$ can be the same as the reference point $P_{REF}$. Accordingly, the location point $P_{LOC\_T1}$ can be an estimated position at the current time t1. Advantageously, even if the position P3 may be invalid when both the GPS and DR positions P1 and P2 are invalid or inaccurate, e.g., at step 620 or 808, the filter 220 can still output the location point. Thus, the navigation apparatus 100 is able to output the positioning points continuously.

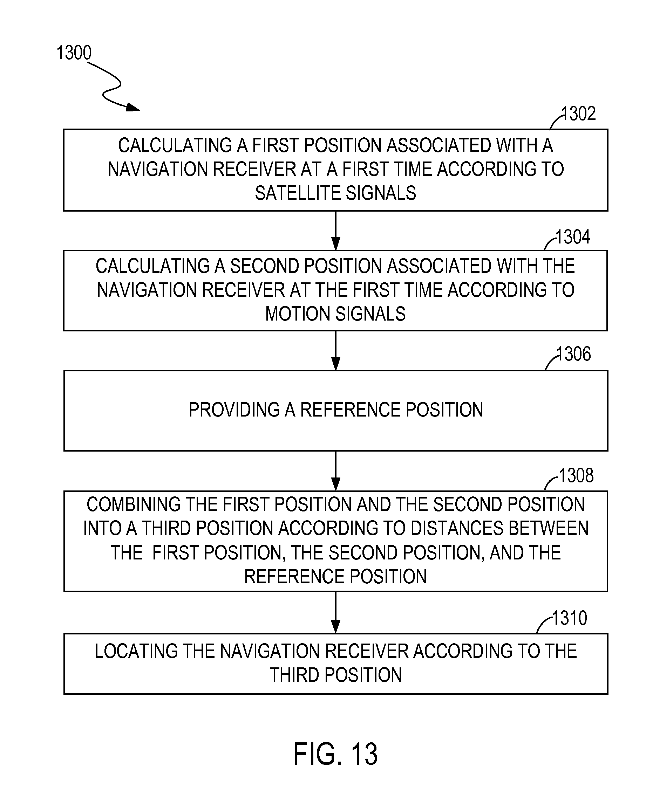

FIG. 13 illustrates a flowchart 1300 of examples of operations performed by a navigation apparatus, e.g., the navigation apparatus 100, in an embodiment according to the present invention. FIG. 13 is described in combination with FIG. 1 - FIG. 12. Although specific steps are disclosed in FIG. 13, such steps are examples. That is, the present invention is well suited to performing various other steps or variations of the steps recited in FIG. 13.

In block 1302, a first position, e.g., the position P1, associated with a navigation receiver, e.g., the receiver 102, at a first time, e.g., the current time t1, is calculated according to satellite signals. In block 1304, a second position associated with the navigation receiver at the first time is calculated according to motion signals indicating a speed and an orientation of the navigation receiver.

In block 1306, a reference position, e.g., the reference position $P_{REF}$, is provided. In one embodiment, location data, e.g., the location data 268, indicating a previous location point of the navigation receiver at a second time prior to the first time is accessed. The reference position is generated according to the previous location point. In one embodiment, a first velocity and a first orientation associated with the navigation receiver at the second time are calculated by a satellite positioning component. A second velocity and a second orientation associated with the navigation receiver at the second time are generated by an inertial positioning component. The first velocity and the second velocity are combined into a third velocity. The first orientation and the second orientation are combined into a third orientation. The reference position is calculated based on the previous location point, the third velocity and the third orientation.

In block 1308, the first position and the second position are combined into a third position, e.g., the position P3, based on distances between the first position, the second position, and the reference position. In one embodiment, weight data indicating weights of the first position and the second position, e.g., the weights A1 and A2, are provided. The first position and the second position are weighted based on the weight data to obtain weighted positions corresponding to the first position and the second position. The weighted positions are combined to generate the third position.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. A method for tracking a navigation receiver which comprises a processor that executes machine-executable instructions stored in a machine-readable medium, said method being accomplished by executing said instructions by said navigation receiver, said method comprising:

   calculating a first position associated with said navigation receiver at a first time according to a plurality of satellite signals;
   calculating a second position associated with said navigation receiver at said first time according to a plurality of motion signals indicating a speed and an orientation of said navigation receiver;
   providing a reference position;
   combining said first position and said second position into a third position based on distances between said first position, said second position, and said reference position; and
   locating said navigation receiver according to said third position.

2. The method as claimed in claim 1, wherein said method further comprises:

   accessing weight data indicating weights of said first position and said second position;
   weighting said first position and said second position based on said weight data to obtain weighted positions corresponding to said first position and said second position; and
   combining said weighted positions to generate said third position.

3. The method as claimed in claim 1 or 2, wherein said method further comprises:

   accessing a satellite flag indicating the validity of said first position;
   accessing an inertial flag indicating the validity of said second position; and
   determining said weight data according to said satellite flag and said inertial flag.

4. The method as claimed in claim 2 or 3, wherein said method further comprises:

   setting a combination flag to a value indicating that said third position is invalid if both said first position and said second position are invalid.

5. The method as claimed in claim 2 wherein said method further comprises:

   comparing a first distance between said first position and said reference position with a threshold;
   comparing a second distance between said second position and said reference position with said threshold; and
   determining said weight data according to results of both of said comparing operations.

6. The method as claimed in claim 5, wherein said method further comprises:

   setting a combination flag to a value indicating that said third position is invalid if said first distance is greater than said first threshold and if said second distance is greater than said second threshold.

7. The method as claimed in claim 2, wherein said method further comprises:

   comparing a first distance between said first position and said second position with a second distance between said first position and said reference position;
   comparing said first distance with a third distance between said second position and said reference position; and
   determining said weight data according to results of both of said comparing operations.

8. The method as claimed in claim 7, wherein the weight of said first position is equal to said third distance divided by a sum of said second distance and said third distance if said first distance is greater than said second distance and if said first distance is greater than said third distance.

9. The method as claimed in claim 7, wherein the weight of said second position is equal to said second distance divided by a sum of said second distance and said third distance if said first distance is greater than said second distance and if said first distance is greater than said third distance.

10. The method as claimed in claim 2, 3 or 4, wherein said method further comprises:

    comparing a first distance between said first position and said reference position with a second distance between said second position and said reference position; and
    determining said weight data according to a result of said comparing operation.

11. The method as claimed in one of claims 2 to 10, wherein said method further comprises:

    accessing a combination flag indicating whether said third position is valid;
    filtering said third position to obtain said location of said navigation receiver if said combination flag indicates that said third position is valid;
    accessing location data indicating a previous location point of said navigation receiver at a second time prior to said first time; and
    estimating said location point at said first time according to said previous location point if said combination flag indicates that said third position is invalid.

12. The method as claimed in one of claims 1 to 11, wherein said method further comprises:

    accessing location data indicating a previous location point of said navigation receiver at a second time prior to said first time; and
    providing said reference position according to said previous location point.

13. The method as claimed in one of claims 1 to 12, wherein said method further comprises:

    calculating a first velocity and a first orientation associated with said navigation receiver at said second time;
    calculating a second velocity and a second orientation associated with said navigation receiver at said second time;
    combining said first velocity and a second velocity into a third velocity;
    combining said first orientation and said second orientation into a third orientation; and
    estimating said reference position based on said previous location point, said third velocity and said third orientation.

14. Navigation receiver comprising a processor that executes machine-executable instructions stored in a machine-readable medium, said receiver executing said instructions for carrying out a method according to one of claims 1 to 13.

15. An apparatus comprising:

an antenna configured to receive a plurality of satellite signals;
a plurality of motion sensors configured to provide motion signals indicating a speed and an orientation of said navigation apparatus; and
a navigation receiver according to claim 14 comprising a processor that executes a plurality of machine-executable components stored in a machine-readable medium to locate said navigation receiver and said navigation apparatus, respectively.

16. A machine-readable storage medium that stores a plurality of machine-executable programming components for carrying out a method according to one of claims 1 to 13.

MOTION SENSOR 106

105

SATELLITE SIGNAL RECEIVER 112

130

TIMER 113

136

MOTION SIGNAL RECEIVER 114

132

102

SATELLITE POSITIONING COMPONENT 122

INERTIAL POSITIONING COMPONENT 124

COMBINATION POSITIONING COMPONENT 126

DATA FILE 128

118

PROCESSOR 116

ANTENNA 104

103

100

FIG. 1

FIG. 2

FIG. 3

FIG. 4

500

502

DETERMINE WEIGHTS OF POSITIONS P1 AND P2 BASED ON SATELLITE FLAG AND INERTIAL FLAG

504

DETERMINE THE WEIGHTS OF POSITIONS P1 AND P2 BASED ON PREDETERMINED CONDITIONS

506

DETERMINE THE WEIGHTS OF POSITIONS P1 AND P2 BASED ON DISTANCES BETWEEN REFERENCE POSITION, THE POSITION P1 AND THE POSITION P2

FIG. 5

502

602 DETERMINE WEIGHTS BY VALIDITY CHECKING MODULE

604 ACCESS A SATELLITE FLAG AND AN INERTIAL FLAG

606 P1 VALID?
YES — NO

608 P2 VALID?
YES — NO

616 P2 VALID?
YES — NO

610 SET A1 AND A2 TO DEFAULT VALUES

612 A1=100% A2=0% P3 IS VALID

618 A1=0% A2=100% P3 IS VALID

620 P3 IS INVALID

504

FIG. 6

FIG. 7

506

802 DETERMINE WEIGHTS BY DISTANCE MODULE

804 $D_{PREF-P1} > D_{TH1}$? —YES→ 806 $D_{PREF-P2} > D_{TH1}$? —YES→ 808 P3 IS INVALID

NO (from 804) ↓

806 NO ↓ 810 A1=0% A2=100% P3 IS VALID

812 $D_{PREF-P2} > D_{TH1}$? —YES→ 814 A1=100% A2=0% P3 IS VALID

NO ↓

816 $D_{P1-P2} > D_{PREF-P1};$ AND $D_{P1-P2} > D_{PREF-P2}$? —YES→ 818 $A1 = D_{PREF-P2} / (D_{PREF-P1} + D_{PREF-P2})$ $A2 = D_{PREF-P1} / (D_{PREF-P1} + D_{PREF-P2})$ P3 IS VALID

NO ↓

820 $D_{PREF-P1} > D_{PREF-P2}$? —YES→ 822 A1=0% A2=100% P3 IS VALID

NO ↓

824 A1=100% A2=0% P3 IS VALID

FIG. 8

FIG. 9A

FIG. 9B

FIG. 9C

FIG. 10

1100

302

P1

$D_{P1-P2}$

P2

$D_{PREF-P1}$

$D_{PREF-P2}$

$P_{REF}$

$D_{TH1}$

FIG. 11

1200

—1202

CALCULATE FINAL LOCATION POINT BY FILTER

—1204

P3 IS VALID?

YES → —1206

FILTER P3 TO OBTAIN $P_{LOCT1}$

NO

—1208

ESTIMATE $P_{LOCT1}$ ACCORDING TO A PREVIOUS LOCATION POINT $P_{LOCT0}$, VELOCITY $V_{T0}$ AND ORIENTATION $OR_{T0}$

FIG. 12

1300

1302

CALCULATING A FIRST POSITION ASSOCIATED WITH A
NAVIGATION RECEIVER AT A FIRST TIME ACCORDING TO
SATELLITE SIGNALS

1304

CALCULATING A SECOND POSITION ASSOCIATED WITH THE
NAVIGATION RECEIVER AT THE FIRST TIME ACCORDING TO
MOTION SIGNALS

1306

PROVIDING A REFERENCE POSITION

1308

COMBINING THE FIRST POSITION AND THE SECOND POSITION
INTO A THIRD POSITION ACCORDING TO DISTANCES BETWEEN
THE FIRST POSITION, THE SECOND POSITION, AND THE
REFERENCE POSITION

1310

LOCATING THE NAVIGATION RECEIVER ACCORDING TO THE
THIRD POSITION

FIG. 13

Europäisches
Patentamt

European
Patent Office

Office européen
des brevets

# EUROPEAN SEARCH REPORT

Application Number

EP 13 17 3579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H02 212713 A (MITSUBISHI ELECTRIC CORP) 23 August 1990 (1990-08-23) * abstract * * pages 3, 4 * * figures 2, 3 * * claim 1 * | 1-16 | INV. G01S19/47 G01S19/49 |
| A | EP 1 818 682 A1 (ALPINE ELECTRONICS INC [JP]) 15 August 2007 (2007-08-15) * abstract * * paragraph [0022] - paragraph [0025] * * figures 4A-4C * | 1-16 | |
| A | JP 2010 145178 A (TOYOTA MOTOR CORP) 1 July 2010 (2010-07-01) * abstract * * paragraph [0028] - paragraph [0030] * | 1-16 | |

TECHNICAL FIELDS
SEARCHED (IPC)

G01S

The present search report has been drawn up for all claims

| Place of search | Date of completion of the search | Examiner |
|---|---|---|
| The Hague | 30 August 2013 | Van den Bosch, I |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 13 17 3579

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2013

| Patent document cited in search report | | Publication date | Patent family member(s) | | Publication date |
|---|---|---|---|---|---|
| JP H02212713 | A | 23-08-1990 | NONE | | |
| EP 1818682 | A1 | 15-08-2007 | CN | 101017200 A | 15-08-2007 |
| | | | EP | 1818682 A1 | 15-08-2007 |
| | | | JP | 4716886 B2 | 06-07-2011 |
| | | | JP | 2007206010 A | 16-08-2007 |
| | | | US | 2007257837 A1 | 08-11-2007 |
| JP 2010145178 | A | 01-07-2010 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210333348